(19) Europäisches Patentamt
European Patent Office
Office européen des brevets

(11) EP 1 432 769 B1

(12) # EUROPÄISCHE PATENTSCHRIFT

(45) Veröffentlichungstag und Bekanntmachung des Hinweises auf die Patenterteilung:
**06.12.2006 Patentblatt 2006/49**

(21) Anmeldenummer: **02777240.9**

(22) Anmeldetag: **27.09.2002**

(51) Int Cl.:
***C09D 17/00*** *(2006.01)* ***C08K 5/1565*** *(2006.01)*

(86) Internationale Anmeldenummer:
**PCT/EP2002/010858**

(87) Internationale Veröffentlichungsnummer:
**WO 2003/031525 (17.04.2003 Gazette 2003/16)**

(54) **DISPERGATOR-ZUSAMMENSETZUNGEN**

DISPERSANT COMPOSITIONS

COMPOSITIONS DISPERSIVES

(84) Benannte Vertragsstaaten:
**AT BE BG CH CY CZ DE DK EE ES FI FR GB GR IE IT LI LU MC NL PT SE SK TR**

(30) Priorität: **06.10.2001 DE 10149379**

(43) Veröffentlichungstag der Anmeldung:
**30.06.2004 Patentblatt 2004/27**

(73) Patentinhaber: **Cognis IP Management GmbH**
**40589 Düsseldorf (DE)**

(72) Erfinder:
- **SCHIEFERSTEIN, Ludwig**
  **40882 Ratingen (DE)**
- **GORZINSKI, Manfred**
  **40227 Düsseldorf (DE)**

(56) Entgegenhaltungen:
**WO-A-87/07735**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

### Gebiet der Erfindung

Die Erfindung betrifft bei 25° C flüssige und gießbare Dispergator-Zusammensetzung für Lackrezepturen auf der Basis eines speziellen Trägermediums und eines Dispergators auf Polyester-Basis.

### Stand der Technik

Dispergatoren werden auf dem Gebiet der Lackherstellung im wesentlichen aus folgenden Gründen eingesetzt:

a) Um den Filmbildner zu dispergieren,
b) um Pigmente und Füllstoffe zu dispergieren und um
c) weitere Additive, die in Lackrezepturen enthalten sein können, beispielsweise Härtungsbeschleuniger, Verdickungsmittel, Verlaufsmittel, Mattierungsmittel, Konservierungsmittel zu dispergieren.

Wie dem Fachmann bekannt, ist es ein allgemeines Bestreben der Lackhersteller, die Komponenten, die zur Herstellung von Lackrezepturen eingesetzt werden, in einer Form zur Verfügung zu haben, die eine einfache Handhabbarkeit gestattet. Als großer Vorteil gilt in diesem Zusammenhang, wenn eine Komponente nicht in fester, sondern in flüssiger Form vorliegt, und dabei bei Raumtemperatur (hierunter wird im Rahmen der vorliegenden Erfindung eine Temperatur von 25 °C verstanden) gießbar ist. Dies wird standardmäßig durch den Einsatz von Lösungsmitteln erreicht, wobei als Lösungsmittel im Prinzip einerseits Wasser, zum anderen organische Lösungsmittel in Betracht kommen. Nun gibt es aber Fälle, wo zum einen Wasser nicht in Betracht kommt, weil es nicht in der Lage ist, das Dispergiermittel in ausreichendem Maße zu lösen oder weil das Dispergiermittel auf Dauer in Wasser nicht stabil ist und wo zum anderen organische Lösungsmittel nicht in Betracht kommen. Der letztere Punkt ist von zunehmender Bedeutung, weil organische Lösungsmittel aus Gründen der Umweltbelastung zunehmend unattraktiv geworden sind und daher weitgehende VOC-Freiheit gewünscht ist (VOC = volatile organic compounds). Es besteht daher ein ständiges Bedürfnis, Dispergiermittel, in einer Form zur Verfügung zu haben, die die geschilderten Nachteile nicht aufweist.

### Beschreibung der Erfindung

Aufgabe der vorliegenden Erfindung war es, Dispergator-Zusammensetzungen bereitzustellen, die aus einem Trägermedium und ein oder mehreren Dispergatoren bestehen und den folgenden Bedingungen genügen: Die Zusammensetzungen sollten bei 25 °C flüssig, homogen, konzentriert, gießbar, lagerstabil und weitgehend VOC-frei sein.

Unter "homogen" wird verstanden, daß der Dispergator homogen in dem Trägermedium verteilt ist. Unter "konzentriert" wird verstanden, daß der Dispergator zu mindestens 20 Gew.-% - bezogen auf die gesamte Zusammensetzung - enthalten ist. Unter "gießbar" wird verstanden, daß die Viskosität der Zusammensetzung gemessen bei 25 °C nach Brookfield bei 20 Umdrehungen pro Minute unterhalb von 50000 mPas liegt. Unter "lagerstabil" wird verstanden, daß die Zusammensetzung auch bei längerer Lagerung stabil bleibt und zwar sowohl in chemischer Hinsicht (keine Zersetzung der Komponenten) als auch im Hinblick auf die Konsistenz (kein Verlust der Homogenität). Unter "weitgehend VOC-frei" wird verstanden, daß die Zusammensetzung praktisch keine flüchtigen Substanzen enthält. Dies bedeutet insbesondere, daß das Trägermedium der Zusammensetzung schwerflüchtig ist.

Das Trägermedium sollte ferner so beschaffen sein, daß keine nachteiligen Wechselwirkungen auftreten, wenn die Zusammensetzung aus Trägermedium und Dispergator zur Herstellung einer Lackrezeptur eingesetzt wird, wobei es ja zwangsläufig in Kontakt mit Filmbildnern, Pigmenten, Füllstoffen und/oder Lackadditiven kommt.

Gegenstand der Erfindung sind bei 25° C flüssige und gießbare Dispergator-Zusammensetzungen für Lackrezepturen, bestehend aus

a) 10 bis 80 Gew.-% eines Trägermediums, wobei es sich um Glycerincarbonat handelt und

b) 20 bis 90 Gew.-% eines oder mehrerer Polyester-Dispergatoren für Lackrezepturen.

Überraschenderweise wurde gefunden, daß die erfindungsgemäßen Zusammensetzungen die oben genannte Aufgabe in jeder Hinsicht ausgezeichnet lösen. Die Zusammensetzungen sind flüssig, homogen, gießbar und lagerstabil. Sie zeichnen sich femer durch weitgehende VOC-Freiheit aus.

Der Gehalt einer Zusammensetzung an VOC kann nach dem Fachmann einschlägig bekannten Methoden betimmt werden. Im Rahmen der vorliegenden Erfindung wird unter weitgehender VOC-Freiheit ein VOC-Wert von weniger als 0,5% und vorzugsweise von weniger als 0,2 % - bezogen auf die gesamte Zusammensetzung - verstanden. Der Gehalt einer Probe an VOC dabei wird im Rahmen der vorliegenden Erfindung in Anlehnung an die DIN 75201 ("Bestimmung des Fogging-Verhaltens von Werkstoffen der Kraftfahrzeug-Innenausstattung") bestimmt und zwar durch folgendes Verfahren: Die Probe wird auf den Boden eines Bechers aus Glas ohne Ausguß mit festgelegten Maßen gebracht. Der Becher wird mit einer Aluminiumfolie abgedeckt, an der flüchtige Bestandteile aus dem Probekörper bzw. der Probe kondensieren können. Diese Aluminiumfolie wird gekühlt. Der so vorbereitete Becher wird 16 Stunden in

einen auf Prüftemperatur von 100 ± 0,3 °C befindlichen Badthermostaten hineingestellt. Die Wirkung des Fogging-Niederschlages auf der Aluminiumfolie wird quantitativ durch Wägung der Folie vor und nach dem Fogging-Versuch erfaßt. Der VOC-Wert wird nach folgender Gleichung berechnet:

$$\text{VOC-Wert (\%)} = (A/B) * 100$$

Dabei bedeuten:

A = Menge des Fogging-Niederschlages (in g)
B = Menge der eingesetzten Probe (in g)

Darüber hinaus sind die erfindungsgemäßen Zusammensetzungen mit Filmbildnern, Pigmenten, Füllstoffen und Lackadditiven, die bei der Herstellung von Lackrezepturen üblicherweise eingesetzt werden, kompatibel.

Bei dem **Trägermedium a)** handelt es sich um Glycerincarbonat, dessen rationaler Name 4-Hydroxymethyl-1,3-dioxolan-2-on lautet. Die Verbindung trägt die Chemical Abstracts Nummer (CAS Registry Number) 931-40-8 und ist durch die nachfolgende Formel (I) gekennzeichnet:

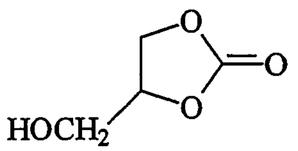

(I)

Bei dem **Dispergator b)** handelt es sich um Polyester. Besonders bevorzugt sind carboxylgruppenhaltige Polyester, die im neutralisierten oder teilneutralisierten Zustand zu mindestens 5 Gew-% wasserlöslich und im sauren Zustand zu mindestens 20 Gew.-% in Glycerincarbonat löslich sind.

Die erfindungsgemäß geeigneten Dispergatoren können einzeln oder im Gemisch miteinander eingesetzt werden.

Als Polyester kommen insbesondere solche in Betracht, die neben hydrophoben Ketten und Carboxylgruppen noch Ethylenoxid-Oligomere als Bausteine enthalten.

Ein weiterer Gegenstand der Erfindung ist die Verwendung der oben beschriebenen Dispergator-Zusammensetzungen bei der Herstellung von Lackrezepturen.

## Beispiele

<u>Eingesetzte Substanzen</u>

Hydropalat 3275: Pigmentdispergator für wässrige Lacksysteme (37,5%ige wässrige Lösung eines mit Dimethylethanolamin neutralisierten Polyesters; Hersteller: Cognis Deutschland GmbH).

<u>Dispergator-Zusammensetzungen</u>

### Beispiel 1

100g Hydropalat 3275 wurden am Rotavapor bei 80°C und 20 mbar von Wasser und Diethanolamin befreit. Es weuden 38 g eines bei Raumtemperatur festen zähen Wachses erhalten. Dieses wurde mit der gleichen Menge Glycerincarbonat bei 70 °C im Wasserbad aufgeschmolzen und durch Rühren homogenisiert. Es resultierte eine bei Raumtemperatur flüssige Lösung mit einer Brookfield-Viskosität (gemessen bei 20 Upm, 25 °C, Spindel 5) von 19 Pas. Die Mischung wurde drei Monate bei Raumtemperatur gelagert und erwies sich als lagerstabil.

## Patentansprüche

1. Bei 25° C flüssige und gießbare Dispergator-Zusammensetzung für Lackrezepturen, bestehend aus

    a) 10 bis 80 Gew.-% eines Trägermediums, wobei es sich um Glycerincarbonat handelt und
    b) 20 bis 90 Gew.-% eines oder mehrerer Polyester-Dispergatoren für Lackrezepturen.

2. Zusammensetzung nach Anspruch 1,wobei die Polyester b) carboxylgruppenhaltig sind und im neutralisierten oder teilneutralisierten Zustand zu mindestens 5 Gew-% wasserlöslich und im sauren Zustand zu mindestens 20 Gew.-% in Glycerincarbonat löslich sind.

3. Zusammensetzung nach Anspruch 2, wobei die Polyester b) zusätzlich Etylenoxid-Oligomere als Bausteine einpolymerisiert enthalten.

4. Verwendung von Dispergator-Zusammensetzungen bei der Herstellung von Lackrezepturen, **dadurch gekennzeichnet, daß** diese Dispergator-Zusammensetzungen bei 25° C flüssige und gießbar sind und aus

    a) 10 bis 80 Gew.-% eines Trägermediums, wobei es sich Glycerincarbonat handelt und
    b) 20 bis 90 Gew.-% eines oder mehrerer Polyester-Dispergatoren für Lackrezepturen

bestehen.

## Claims

1. A dispersant composition for paint formulations which is liquid and pourable at 25°C and which consists of

   a) 10 to 80% by weight of a carrier medium in the form of glycerol carbonate and
   b) 20 to 90% by weight of one or more polyester-based dispersants for paint formulations.

2. A composition as claimed in claim 1, **characterized in that** the polyesters b) are carboxyl-containing polyesters of which at least 5% by weight is water-soluble in the neutralized or partly neutralized state and of which at least 20% by weight is soluble in glycerol carbonate in the acidic state.

3. A composition as claimed in claim 2, **characterized in that** the polyesters b) additionally contain ethylene oxide oligomers as structural elements.

4. The use of dispersant compositions in the production of paint formulations, **characterized in that** the dispersant compositions are liquid and pourable at 25°C and consist of

   a) 10 to 80% by weight of a carrier medium in the form of glycerol carbonate and
   b) 20 to 90% by weight of one or more polyester-based dispersants for paint formulations.

## Revendications

1. Composition dispersive coulable et liquide à 25 °C pour formulations de peintures, composée de :

   a) 10 à 80 % en poids d'un milieu support, ce milieu support étant du carbonate de glycérol, et
   b) 20 à 90 % en poids d'un ou de plusieurs dispersants polyesters pour formulations de peintures.

2. Composition selon la revendication 1,
   **caractérisée en ce que**
   les polyesters b) contiennent des groupes carboxyle et sont solubles dans l'eau à l'état neutralisé ou partiellement neutralisé à raison d'au moins 5 % en poids et sont solubles dans le carbonate de glycérol à l'état acide à raison d'au moins 20 % en poids.

3. Composition selon la revendication 2,
   **caractérisée en ce que**
   les polyesters b) contiennent en outre comme éléments structuraux des oligomères d'oxyde d'éthylène polymérisés.

4. Utilisation de compositions dispersives lors de la préparation de formulations de peintures,
   **caractérisée en ce que**
   ces compositions dispersives sont coulables et liquides à 25 °C et sont composées de :

   a) 10 à 80 % en poids d'un milieu support, ce milieu support étant du carbonate de glycérol et
   b) 20 à 90 % en poids d'un ou de plusieurs dispersants polyesters pour formulations de peintures.